# EUROPEAN PATENT APPLICATION

(11) **EP 2 275 365 A1**
(43) Date of publication of application: **19.01.2011**
(21) Application number: 09165774.2
(22) Date of filing: 17.07.2009
(51) Int. Cl.: B65G 15/02

(54) **Support and guiding system for curved conveyor belts**

(71) Applicant: Vila Torra, Cecilia, 08251 Santpedor (ES)
(72) Inventor: Vila Torra, Cecilia, 08251 Santpedor (ES)
(74) Representative: Carpintero Lopez, Francisco

(57) **Abstract**

Support and guide assembly (5) for curved conveyor belts (2) provided with a peripheral protuberance (14), of those which are mounted on a chassis (1) whereon the curved conveyor belt (2) slides, the support and guide assembly whereof comprises: a central fastening base (6); two pairs of bearings (8a,8b,9a,9b) for the support and guiding of the conveyor belt (2) which operate on the peripheral protuberance (14) thereof; two pivoting bearing holders (7a,7b) for the outer bearings (8a,9a); and means for the fastening and positioning of the outer bearing holders (8a,8b). The support and guide assembly (5) is fastened, through its central fastening base (6), to the outer face of the chassis (1), having provided that the different bearings (8a,8b,9a,9b) are fastened to the central base (6) and to the bearing holders (7a,7b), respectively, through the inner face (11) of the belt curve, allowing the replacement thereof from the exterior without the need to dismantle the assembly (5).

## Description

### OBJECT OF THE INVENTION

The main object of the present invention consists of a support and guide assembly for curved conveyor belts, of those which are mounted on a chassis of the same curvature, provided with the corresponding runners whereon the curved conveyor belt slides, the assembly whereof comprises two pairs of bearings which operate on the peripheral protuberance of the belt, mounted on pivoting bearing holders, which permit an easy and fast inspection, replacement and repair of the components which integrate it, minimizing stoppage times.

### BACKGROUND OF THE INVENTION

The installation of conveyor belts for the movement of packages or parcels from one point to another requires straight segments and curved segments, to configure the route from the point of origin to the point of arrival of the goods.

It is in the curved segments where greatest problems and faults arise, since they require peripheral guide devices for the curved conveyor belt to work correctly. These guide devices comprise bearing sets that retain and guide the curved conveyor belt, through a peripheral protuberance disposed for said purpose on the outer perimeter of the conveyor belt.

In the state of the art, patents EP0706489, EP0716034, DE29502064 and DE19535757 are already known and disclose support and guide devices such as those previously described, which are installed in the interior of the curve, through the inner surface of the chassis.

In this type of support and guide device, due to the radial oscillations typical of the curved belt, overstresses are provoked thereon, which cause constant faults, vibrations and jamming of the bearings.

In the event of a fault, it is necessary to stop the conveyor belt, locate the support and guide device which has broken down, dismantle it, replace it and re-start the conveyor belt, with the consequent stoppage time.

Since the devices described in the aforementioned patents are installed in the interior of the curve, and the inner bearings remain concealed by the conveyor belt, to locate the fault and repair it means it is necessary to dismantle many of its components, with the time increase this entails. The stoppage times to inspect and repair faults in curved conveyor belts, with support and guide devices of this type are excessively high, which cause considerable financial losses.

### DESCRIPTION OF THE INVENTION

The support and guide assembly for curved conveyor belts proposed by the invention resolves the aforementioned problem, as it allows the inspection, repair and/or replacement of its components quickly and simply, minimizing stoppage times.

Therefore, and more specifically, the support and guide assembly for curved conveyor belts provided with a peripheral protuberance, of those which are mounted on a chassis of the same curvature whereon the curved conveyor belt slides through the corresponding runners, the support and guide assembly whereof comprises: a central fastening base; two pairs of bearings for the support and guiding of the conveyor belt which operate on the peripheral protuberance thereof, one pair for the upper carry segment of the conveyor belt and another for the lower return; two pivoting bearing holders for the outer bearings; and means for the fastening and positioning of the outer bearing holders. Said support and guide assembly is fastened, through its central fastening base, to the outer face of the chassis for its viewing and handling from the exterior, having provided that the different bearings are fastened to the central base and to the bearing holders, respectively, through the inner face of the belt curve, allowing the replacement thereof from the exterior without the need to dismantle the assembly. In this way, removing the peripheral protective cover which covers the support and guide assemblies, it is possible to view, from the outside, the state and operation of all bearings, both outer and inner, without the need to stop the conveyor belt.

The bearing holders preferably comprise a double C-shaped structure disposed in parallel and joined by its outer ends by a bridge, provided on its inner surface with a shaft for the coupling of the outer bearing, and the inner ends whereof of the double C-shaped structure are articulated to the side walls of the central fastening base, for the pivoting of the bearing holders. Thanks to the pivoting of the outer bearing holders, we can open the support assemblies to facilitate the introduction of the peripheral protuberance of the curved conveyor belt, both the carry segment and the lower return. Once the conveyor belt has been placed in its working position, the outer bearing holders are closed and locked in said working position, by positioning and locking means which we will explain below.

The articulation point of the bearing holders is positioned, with respect to the planes defined by the axial support surfaces of the bearings, towards the inner part of the curve, with the object that the pair of forces applied provokes a momentum in the closure direction of the outer bearing holders. This disposal offers the advantage that, when the radial oscillations of the belt exert forces towards the interior of the curve, the outer bearing holders tend to close and therefore to interlock the bearings against the peripheral protuberance, favouring their retention.

In order to view and directly access all bearings from the outside, the central area of the double C-shaped structure of the bearing holder is open. This permits locating the faulty bearing without stopping the conveyor belt and replacing it with minimum stoppage time.

The inner bearings are mounted in the interior of the central fastening base, on two inclined surfaces in a position converging towards the exterior, provided with separate shafts for the coupling of the bearings. Since these fastening surfaces are open towards the exterior, it is possible to easily view the state of the inner bearings, and directly replace them, without the need to dismantle the assembly, so that the machine stoppage time in the case of faults is the minimum.

The means for the positioning and locking of the bearing holders comprises a slider device which positions and locks the bearing holders in three operating positions: a first position wherein the two bearing holders can freely pivot; a second position wherein one of the two bearing holders is locked in closed position; and a third position wherein the two bearing holders are locked in closed position.

Said slider device comprises a U-shaped grip, duly guided through its side branches on the side walls of the central fastening base, between the articulation points of the outer bearing holders, the side branches whereof are provided with two parallel passages, disposed above and below each side branch, for the introduction, and therefore the locking, of appendages disposed in the inner branch ends of the double C-shaped structure of the outer bearing holders.

To be able to sequentially lock the outer bearing holders, for example, to first fasten and lock the lower segment of the belt and then the upper segment, one of the passages of the side branches of the U-shaped grip is of greater length. In this way, the movement of the grip will first lock the bearing holder that inserts its appendage in the passage of greater length.

Finally, to facilitate the complete replacement of the entire support and guide assembly, in order to reduce stoppage times, it is fastened on the outer surface of the curved chassis, through the central fastening base, by at least two screws which pass through said base, which can be directly accessed and operated from the exterior.

### DESCRIPTION OF THE DRAWINGS

To complement the description being made and in order to aid towards a better understanding of the characteristics of the invention, in accordance with a preferred example of practical embodiment thereof, a set of drawings is accompanied as an integral part of said description wherein the following has been represented with illustrative and non-limitative character:
Figure 1.- Shows a perspective view of a curved conveyor belt, wherein it is possible to observe all the elements that integrate it, including a plurality of support and guide assemblies object of the present invention.
Figure 2.- Shows an exploded perspective view of the different elements that comprise the support and guide assembly.
Figure 3.- Shows a partial radial section, of the curved conveyor belt, wherein it is possible to observe the outer placement of the support and guide assembly on the chassis, with the carry and return segments of the conveyor belt duly guided by the respective pairs of bearings.
Figure 4.- Shows a central longitudinal section of the support and guide assembly, wherein it is possible to observe the location of the bearings and their accessibility from the exterior.
Figure 5.- Shows a central longitudinal section similar to the previous, wherein the area where the articulation point of the outer bearing holders is located has been represented.
Figure 6.- Shows a sequence of the support and guide assembly in its three positions, with their respective detailed views of the slider device for its sequential locking.

### PREFERRED EMBODIMENT OF THE INVENTION

In light of the figures, a preferred embodiment of the support and guide assembly for conveyor belts which constitutes the object of this invention is described.

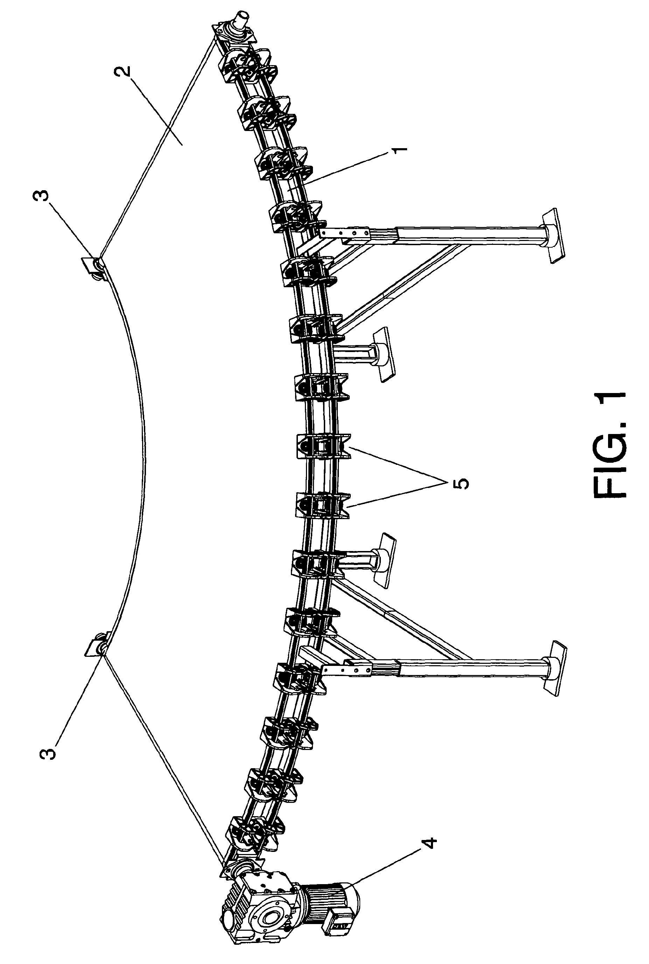

Figure 1 shows a 90° curved belt segment wherein it is possible to observe the support chassis (1), whereon the curved conveyor belt (2) slides, conveyed by the end rollers (3), and driven by the drive motor (4). Likewise, it is possible to observe the disposal of the support and guide assemblies (5), mounted on the peripheral contour of the chassis (1) for the support and guiding of the belt (2).

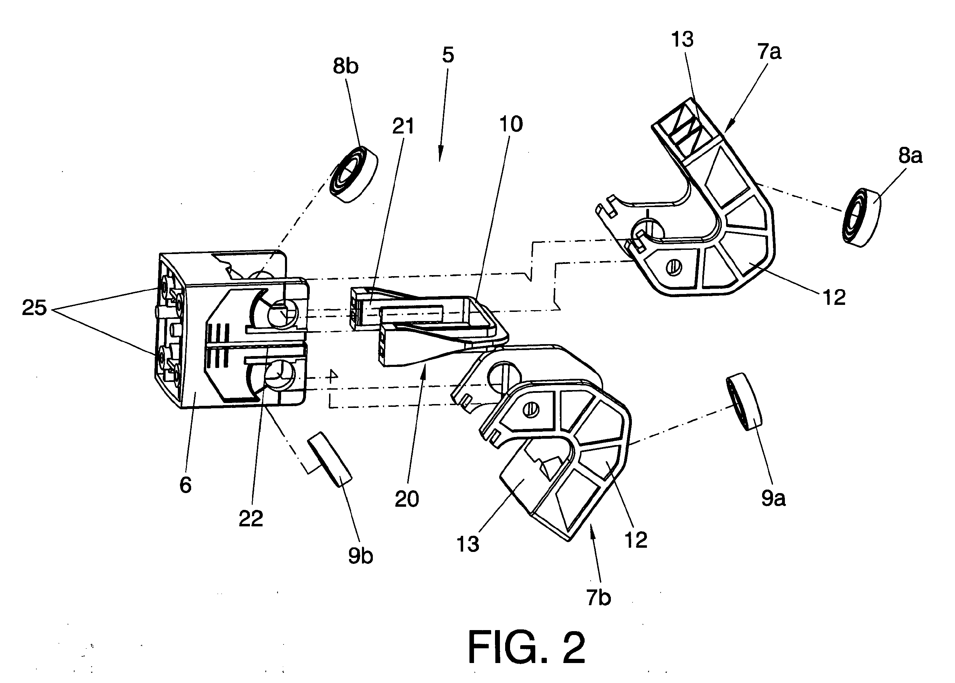

Figure 2 shows the constitution of a support and guide assembly (5), which comprises a central fastening base (6) for its mounting on the outer surface of the chassis (1), the outer bearing holders (7a, 7b), the pairs of bearings (8a, 8b, 9a, 9b), and the grip (10) for positioning and locking the outer bearing holders (7a, 7b).

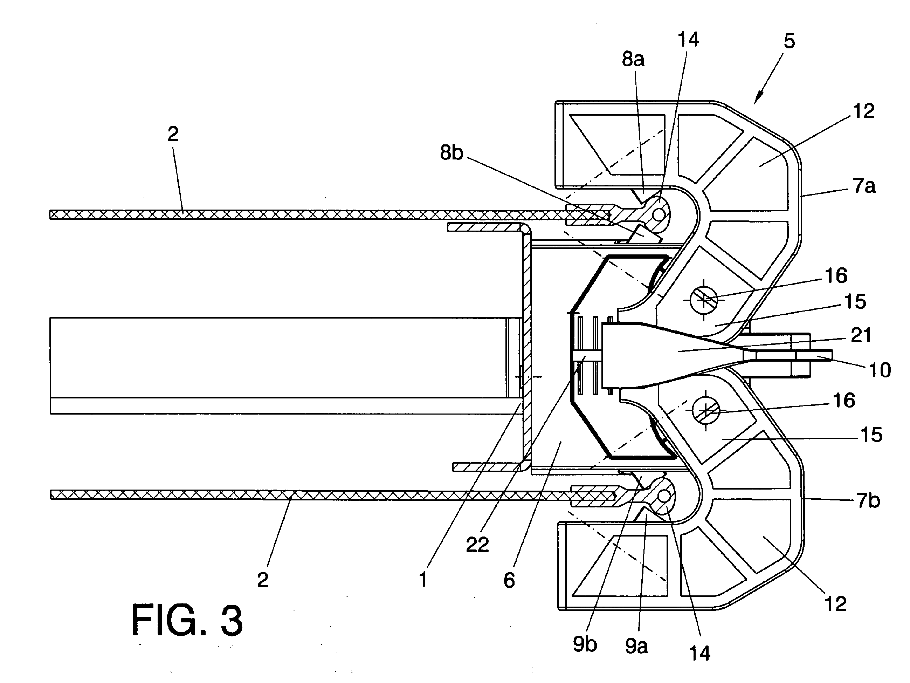

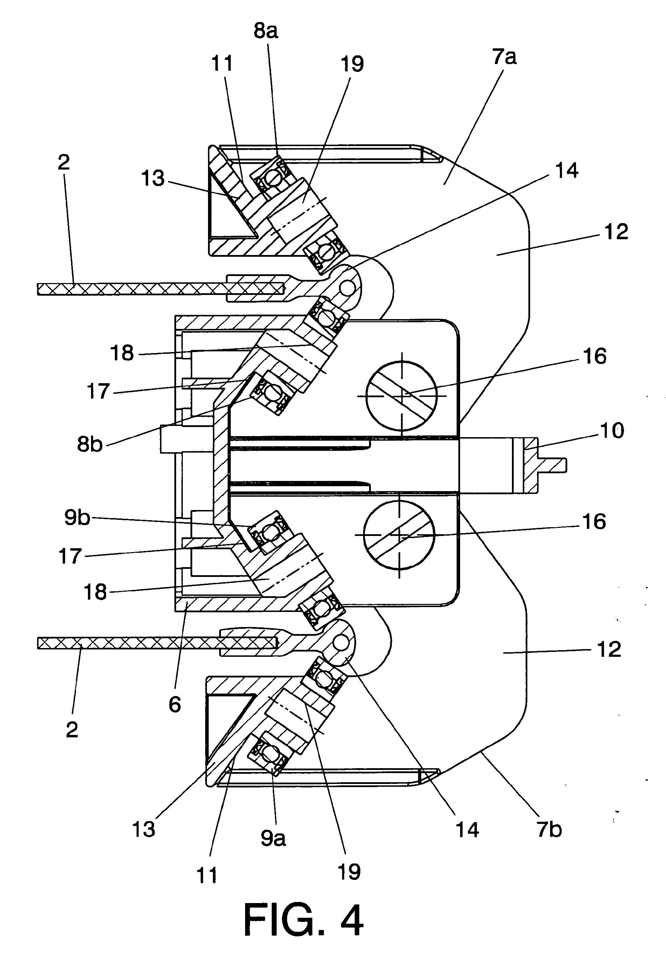

As can be observed in figure 3, the support and guide assembly (5) is mounted on the outer surface of the chassis (1), through the central fastening base (6), which allows the quick viewing of all the elements that form the assembly (5) from the exterior, without the need to stop or dismantle the belt (2). Likewise, figure 4 shows how the different bearings (8a, 8b, 9a, 9b) are mounted on the central fastening base (6) and the bearing holders (7a, 7b), through the inner face (11) of the belt curve. This means that the introduction and extraction of the bearings (8a, 8b, 9a, 9b), for their replacement, can be performed from the exterior, without the need to dismantle neither the assembly (5) nor the conveyor belt (2).

The outer bearing holders (7a, 7b), which support the outer bearings (8a, 8b), are composed of double C-shaped structure (12) disposed in parallel position and joined by its outer ends by a bridge (13), from the inner face (11) whereof a shaft (19) perpendicularly emerges for the coupling of the outer bearings (8a, 9a). The bridge (13) is disposed with a certain inclination so that the bearings (8a, 8b) contact on the protuberance (14) of the belt (2) with a determined working angle. Said bearing holders (7a, 7b), through the inner ends (15) of the double C-shaped structure (12), are articulated to the central fastening base (6) for their pivoting, at one point (16), which we will explain below. So that the bearing holders (7a, 7b) do not obstruct the vision and access to the different bearings (8a, 8b, 9a, 9b), the central area comprised between the two "Cs" of the structure (12) and below the bridge (13), is open. The pivoting of the outer bearing holders (7a, 7b) allows the installation and replacement of the conveyor belt (2), facilitating the entry and exit of the protuberance (14) from its working position.

The inner bearings (8b, 9b) are directly mounted on the central fastening base (6), for which it has two inclined surfaces (17) in its interior, in a position converging towards the exterior, wherefrom separate shafts (18) emerge for the coupling of the bearings (8b, 9b). This disposal makes it possible to view the state of the inner bearings (8b, 9b) from the exterior and replace them without the need to dismantle the assembly (5).

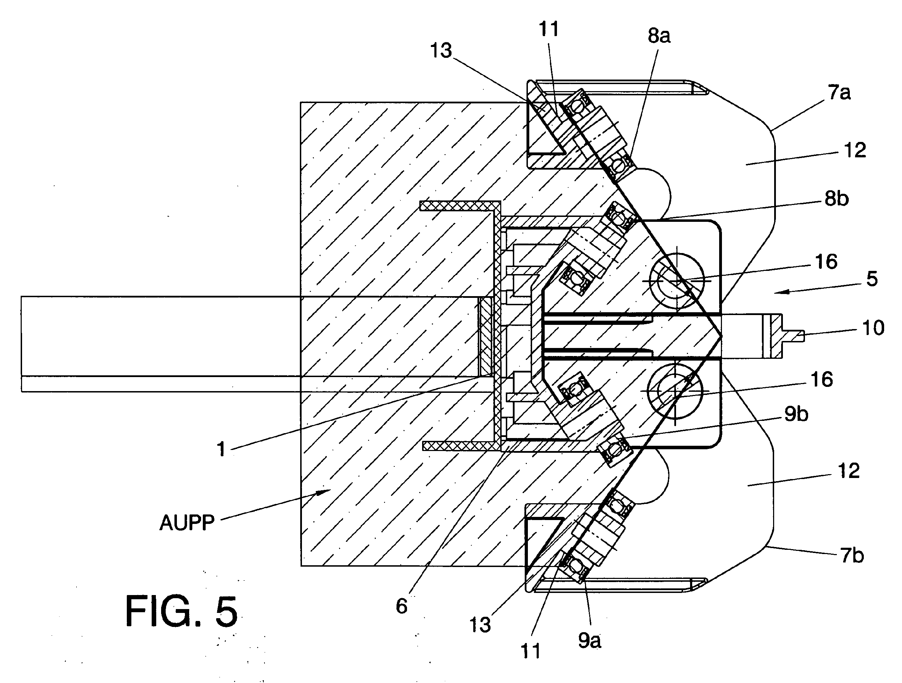

As we have previously indicated, the outer bearing holders (7a, 7b) are articulated on the side walls of the central fastening base (6) through articulation points (16) situated, with respect to the planes defined by the axial support surfaces (11) of the bearings (8a, 9a), towards the inner part of the curve, as can be observed in figure 5. The articulation points (16) can be comprised within the area of location of the pivoting point (ALPP), with the object that the pair of forces applied causes a momentum in the closure direction of the outer bearing holders (7a, 7b), and therefore, the outer bearings (8a, 9a) tend to interlock against the peripheral protuberance (14), thus favouring their retention.

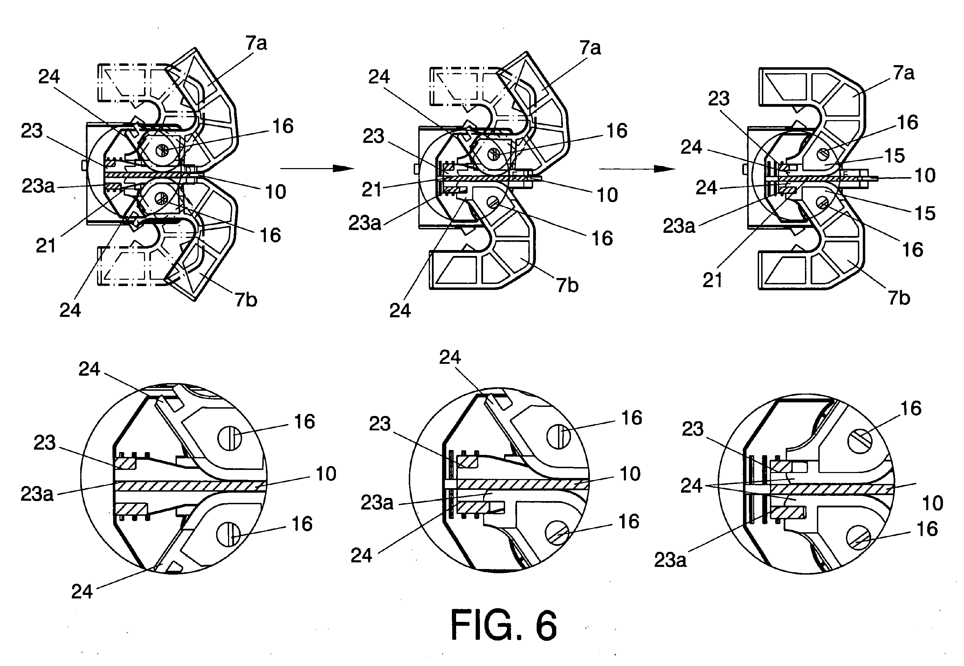

The positioning and locking of the outer bearing holders (7a, 7b) is performed by a slider device (20), which releases and locks them in three operating positions, as can be observed in figure 6. In a first position of the slider device (20) the two bearing holders (7a, 7b) can freely pivot to enable the entry of the protuberance (14) of the belt (2), both in its carry segment (upper), and in the return segment (lower). In a second position one of the two bearing holders (7a, 7b) is locked in a closed position, whilst the other can pivot freely. In the present example of embodiment, the bearing holder (7b) is first locked, to first position the return segment of the conveyor belt (2) i.e. the lower one. In the third position, the two bearing holders (7a, 7b) are locked and are, therefore, in working position.

The slider device (20) is composed of a U-shaped grip duly guided, through side branches (21), on separate grooves (22) made in the side walls of the central fastening base (6). Said side branches (21) are provided with one pair of passages (23) disposed above and below each one of the side branches (21), wherein the appendages (24) disposed in the lower ends (15) of the double C-shaped structure (12) of the outer bearing holders (7a, 7b) are introduced. The closure of the outer bearing holders (7a, 7b) implies that the appendages (24) enter the trajectory of the slider device (20), which means that on performing the longitudinal movement of the grip, the appendages (24) are introduced in the passages (23), being locked in said position. To perform the sequential locking of the bearing holders (7a, 7b), one of the passages (23a), is of greater length, being locked in first place, since its appendage (24) will first penetrate in said passage (23a).

Finally, the support and guide assembly (5) is fastened, on the outer surface of the curved chassis (1), by four screws, not represented in the drawings, which are introduced in separate orifices (25) made in the central fastening base (6), which can be directly accessed and operated from the exterior of the assembly (5).

## Claims

1. Support and guide assembly (5) for curved conveyor belts (2) provided with a peripheral protuberance (14), of those which are mounted on a chassis (1) of the same curvature whereon the curved conveyor belt (2) slides through the corresponding runners (3), the support and guide assembly whereof (5) comprises: a central fastening base (6); two pairs of bearings (8a, 8b, 9a, 9b) for the support and guiding of the conveyor belt (2) which operate on the peripheral protuberance (14) thereof, one pair (8a, 8b) for the upper carry segment of the conveyor belt (2), and another pair (9a, 9b) for the lower return; two pivoting bearing holders (7a, 7b) for the outer bearings (8a, 9a); and means for the fastening and positioning of the outer bearing holders (8a, 8b), **characterized in that** the support and guide assembly (5) is fastened, through its central fastening base (6), to the outer face of the chassis (1) for its viewing and handling from the exterior, having provided that the different bearings (8a, 8b, 9a, 9b) are fastened, to the central base (6) and to the bearing holders (7a, 7b) respectively, through the inner face (11) of the belt curve, allowing the replacement thereof from the exterior without the need to dismantle the assembly (5).

2. Support and guide assembly (5) for curved conveyor belts (2) according to claim 1, **characterized in that,** the bearing holders (7a, 7b) comprise a double C-shaped structure (12) disposed in parallel and joined by its outer ends by a bridge (13), provided on its inner surface (11) with a shaft (19) for the coupling of the outer bearing (8a, 9a), and the inner ends whereof (15) of the double C-shaped structure (12) are articulated to the side walls of the central fastening base (6), for the pivoting of the bearing holders (7a, 7b).

3. Support and guide assembly (5) for curved conveyor belts (2) according to claim 2, **characterized in that** the articulation points (16) of the bearing holders (7a, 7b), are situated, with respect to the planes defined by the axial support surfaces (11) of the outer bearings (8a, 9a), towards the inner part of the curve, so that the pair of forces applied causes a momentum in the closure direction of the outer bearing holders (7a, 7b).

4. Support and guide assembly (5) for curved conveyor belts (2) according to claim 2, **characterized in that** the central area of the double C-shaped structure (12) of the bearing holders (7a, 7b) is open to view and directly access the bearings (8a, 9a)

5. Support and guide assembly (5) for curved conveyor belts (2) according to claim 1, **characterized in that** the central fastening base (6) comprises in its interior two inclined surfaces (17) in a position converging towards the exterior, provided with separate shafts (18) for the coupling of the inner bearings (8b, 9b).

6. Support and guide assembly (5) for curved conveyor belts (2) according to any of the preceding claims, **characterized in that** the means for the positioning and locking of the bearing holders (7a, 7b) comprises a slider device (20) which positions and locks the bearing holders (7a, 7b) in three operating positions: a first position wherein the two bearing holders (7a, 7b) can freely pivot; a second position wherein one of the two bearing holders (7b) is locked in closed position, and a third position wherein the two bearing holders (7a, 7b) are locked in closed position.

7. Support and guide assembly (5) for curved conveyor belts (2) according to claim 6, **characterized in that** the slider device (20) comprises a U-shaped grip duly guided through its side branches (21) on the side walls of the central fastening base (6), between the articulation points of the outer bearing holders (16), the side branches (21) whereof are provided with two parallel passages (23), disposed above and below each side branch (21), for the introduction, and therefore the locking, of appendages (24) disposed in the inner branch ends (15) of the double C-shaped structure (12) of the outer bearing holders (7a, 7b).

8. Support and guide assembly (5) for curved conveyor belts (2) according to claim 7, **characterized in that** one of the passages (23a) of the U-shaped grip, is of greater length to sequentially lock the outer bearing holders (7a, 7b).

9. Support and guide assembly (5) for curved conveyor belts (2) according to claim 1, **characterized in that** the support and guide assembly (5) is fastened on the curved chassis (1) through the central fastening base (6), by at least two screws which pass through said base, which can be directly accessed and operated from the exterior of the assembly (5).
